# EUROPÄISCHE PATENTSCHRIFT

(11) **EP 2 816 207 B1**
(45) Veröffentlichungstag und Bekanntmachung des Hinweises auf die Patenterteilung: **24.04.2019**
(21) Anmeldenummer: 14170176.3
(22) Anmeldetag: 28.05.2014
(51) Int. Cl.: F01P 7/16

(54) **Thermostat-Ringschieberventil und Kühlsystem**
Thermostat ring slide valve and cooling system
Soupape à coulisse annulaire thermostatique et système de refroidissement

(30) Priorität: 18.06.2013 DE 102013211333
(43) Veröffentlichungstag der Anmeldung: 24.12.2014
(73) Patentinhaber: Bayerische Motoren Werke Aktiengesellschaft, 80809 München (DE)
(72) Erfinder: Pippel, Thomas, 82008 Unterhaching (DE)

(56) Entgegenhaltungen:
- EP-A1- 1 752 628
- EP-A2- 0 138 618
- EP-A2- 0 903 482
- GB-A- 2 068 511
- US-A1- 2002 043 224

## Beschreibung

Die Erfindung betrifft ein Thermostat-Ringschieberventil, insbesondere für ein Kühlsystem einer Verbrennungskraftmaschine, sowie ein Kühlsystem mit einem Thermostat-Ringschieberventil.

Der Kühlkreislauf eines Fahrzeugmotors ist normalerweise in mehrere Teilkreisläufe aufgeteilt. Beim Starten des Motors fließt das Kühlmittel zunächst nur durch das Motorgehäuse. Bei steigenden Motortemperaturen wird hingegen das Kühlmittel zusätzlich über den Kühler des Fahrzeugs geleitet, um die Temperatur des Kühlmittels zu senken. Der Kühlkreislauf versorgt außerdem z.B. noch die Heizung des Fahrzeuginnenraums.

Die verschiedenen Abschnitte des Kühlkreislaufs werden abhängig von der Temperatur zugeschaltet oder abgetrennt, indem ein Thermostat einen Ventilkörper bewegt. Bei bekannten Ventilen wird beispielsweise ein zweiteiliger Ventilkörper eingesetzt, der einen zum Rest des Ventilkörpers beweglichen Deckel aufweist, der in bestimmten Situationen vom Ventilkörper abgehoben wird, um einen Strömungsweg freizugeben.

In der US 2002/0043224 A1 ist ein Kühlsystem einer Verbrennungskraftmaschine mit einem Thermostat-Ringschieberventil gezeigt, bei dem der Ringschieber zwei axial getrennte Einlassöffnungen aufweist und das den Ringschieber aufnehmende Gehäuse zwei auf unterschiedlichen axialen Höhen angeordnete Fluideinlässe hat, wobei ein dritter Fluideinlass und ein Fluidauslass an den gegenüberliegenden axialen Enden des Ventils angeordnet sind. In der Ausgangsstellung ist der mit einem Kühlerrücklauf verbundene Fluideinlass verschlossen, während der mit einem Motorrücklauf verbundene Fluideinlass geöffnet ist. Bei Erwärmung des Kühlmittels verschiebt sich der Ringschieber im Gehäuse, wobei der Motorrücklauf-Fluideinlass geschlossen und der Kühlerrücklauf-Fluideinlass geöffnet wird. Der axiale Fluideinlass, der mit einem Heizungskreislauf verbunden ist, steht stets in Strömungsverbindung mit dem Fluidauslass.

Die EP 1 752 628 A1 und die GB 2 068 511 A zeigen Ringschieber mit umfangsmäßig abschnittsweise umlaufenden Öffnungen

EP2048416 zeigt einen Ringschieber mit gleichzeitig komplett verschlossenen Fluideinlässen,

Aufgabe der Erfindung ist es, ein einfach aufgebautes Thermostat-Ringschieberventil zu schaffen und ein Kühlsystem für eine Verbrennungskraftmaschine zu vereinfachen.

Dies wird mit einem Thermostat-Ringschieberventil nach Anspruch 1 erreicht. Das Antriebssystem, das das temperaturabhängige Verschieben des Ringschiebers im Gehäuse ermöglicht, ist vorzugsweise ohne externe Strom- oder Energieversorgung ausgeführt.

Das Thermostat-Ringschieberventil ist so ausgelegt, dass eine ständige Strömungsverbindung von einem Abschnitt des Kühlkreislaufs, beispielsweise einer Fahrzeuginnenraumheizung, zu einer Wasserpumpe besteht. Auf komplexe Bypasslösungen kann daher verzichtet werden. Da kein separater Deckel bewegt werden muss, kann der Ringschieber vereinfacht werden und lässt sich insbesondere als einteiliges Bauteil ausbilden, was die Kosten senkt.

Der Ringschieber ist vorzugsweise im Gehäuse vormontiert, wobei die gesamte Einheit in einen Zulaufkanal der Wasserpumpe eingesetzt werden kann.

Der dritte Fluideinlass kann in einer Normalstellung über die untere Einlassöffnung mit dem Fluidauslass verbunden sein.

Die axiale Länge des Ringschiebers ist vorzugsweise so gewählt, dass bei einer Verschiebung des Ringschiebers bei steigender Temperatur dessen offenes axiales Ende den dritten Fluideinlass freigibt.

Alternativ oder zusätzlich ist im Gehäuse des Thermostat-Ringschieberventils eine direkte Verbindung zwischen dem dritten Fluideinlass und dem Fluidauslass geschaffen. Insbesondere lassen sich die Durchmesser von Gehäuse und Ringschieber so anpassen, dass eine ständige Strömungsverbindung zwischen dem Fluideinlass und dem Außenumfang des Ringschiebers gebildet ist.

Die Einlassöffnungen sind vorzugsweise in Form von umfangsmäßig weit gehend umlaufenden Einlassschlitzen ausgebildet.

Das Thermostat-Ringschieberventil ist vorteilhaft so ausgelegt, dass ein erster und ein zweiter Fluideinlass jeweils komplett verschlossen, jeweils teilweise geöffnet oder jeweils einzeln komplett geöffnet sein können.

Der Fluidauslass ist vorzugsweise an einem der axialen Enden des Gehäuses angeordnet.

In einer bevorzugten Ausführungsform ist der Ringschieber an einem ersten axialen, stirnseitigen Ende geschlossen und an einem zweiten axialen, stirnseitigen Ende offen ausgebildet. Am ersten axialen Ende kann ein Deckel vorgesehen sein, der mit einer zylindrischen Gehäusewand direkt und fest verbunden ist.

Das offene axiale Ende des Ringschiebers steht vorzugsweise in ständiger Strömungsverbindung mit dem Fluidauslass.

Im Ringschieber kann ein Überdruckventil vorgesehen sein, das insbesondere im geschlossenen axialen Ende des Ringschiebers angeordnet ist. Dabei kann es sich um ein Rückschlagventil handeln.

Der Ringschieber ist vorzugsweise topfartig ausgebildet. Das Gehäuse des Thermostat-Ringschieberventils kann sich zum offenen axialen Ende des Ringschiebers innenseitig stufenweise aufweiten.

Wie es von herkömmlichen Thermostat-Ringschieberventilen bekannt ist, ist vorzugsweise ein Thermostatelement innerhalb des Ringschiebers angeordnet. Die Ausdehnung des Thermostatelements mit steigender Temperatur bewegt dabei den gesamten Ringschieber. Die notwendige Rückstellkraft wird vorzugsweise über wenigstens eine Rückstellfeder im Inneren des Ringschiebers erzeugt. Rückstellfedern können auch eine Fixierung der aktuellen Position des Ringschiebers im Gehäuse bewirken, um unerwünschte Klappergeräusche zu vermeiden.

Axial zwischen den Fluideinlässen sind im Gehäuse vorzugsweise Dichtelemente vorgesehen, die die Fluideinlässe fluiddicht voneinander trennen. Bei insgesamt drei Fluideinlässen sind beispielsweise vier Dichtringe in Ebenen axial ober- und unterhalb der Fluideinlässe angeordnet.

Bei einem Kühlsystem nach Anspruch 9, das ein oben beschriebenes Thermostat-Ringschieberventil aufweisen kann, sind drei Fluideinlässe mit Rücklaufkanälen eines Heizungskreislaufs, eines Motorkreislaufs und eines Kühlerkreislaufs verbunden, das heißt, der Heizungskreislauf ist mit einem Fluideinlass, der Motorkreislauf ist mit einem anderen Fluideinlass und der Kühlerkreislauf ist mit wieder einem anderen Fluideinlass verbunden. In diesem Fall sind vorzugsweise exakt drei Fluideinlässe vorgesehen. Der Motorkreislauf ist insbesondere ein Kurbelgehäusekreislauf, in dem der eigentliche Kühler des Fahrzeugs nicht durchströmt wird. Der Kühlerkreislauf verläuft hingegen durch den Kühler der Verbrennungskraftmaschine.

Das oben beschriebene Überdruckventil ist insbesondere zwischen dem Motorkreislaufrücklauf und dem Wasserpumpenzulauf angeordnet, sodass sich Druckspitzen im Kühlsystem vermeiden lassen.

Das Thermostat-Ringschieberventil ist so angeordnet, dass mit steigender Temperatur zunächst der Rücklaufkanal des Motorkreislaufs und dann kontinuierlich zusätzlich der Rücklaufkanal des Kühlwasserkreislaufs geöffnet wird. Bei weiter steigender Temperatur wird der Rücklaufkanal des Motorkreislaufs wieder geschlossen.

In jeder Stellung des Ringschiebers besteht vorzugsweise über den dritten Fluideinlass und den Fluidauslass eine Strömungsverbindung vom Heizungskreislauf zu einer Wasserpumpe des Kühlsystems. Der Heizungsrücklauf ist dabei entweder über die untere Einlassöffnung oder direkt mit dem Fluidauslass verbunden.

Die Erfindung wird nachfolgend anhand eines Ausführungsbeispiels mit Bezug auf die beigefügten Zeichnungen näher beschrieben. In den Zeichnungen zeigen:
- Figur 1 eine schematische Schnittansicht eines erfindungsgemäßen Thermostat-Ringschieberventils;
- Figur 2 eine Seitenansicht des Thermostat-Ringschieberventils aus Figur 1 ohne Gehäuse; und
- Figuren 3 bis 6 schematische Längsschnittansichten verschiedener Funktionszustände des Thermostat-Ringschieberventils aus Figur 1.

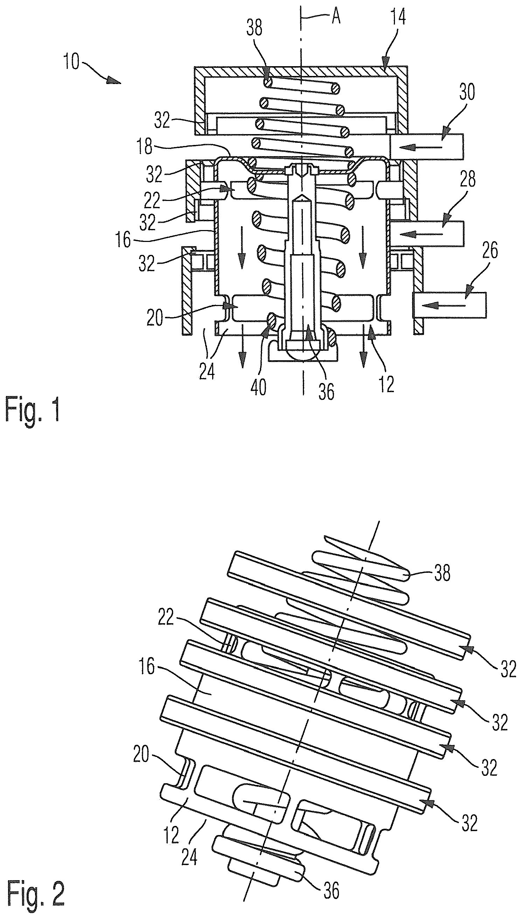

Figur 1 zeigt ein Thermostat-Ringschieberventil 10, das einen Ringschieber 12 aufweist, der in einem Gehäuse 14 aufgenommen ist. Der Ringschieber 12 hat eine topfförmige Gestalt, mit einer im Wesentlichen zylindrischen Umfangswand 16, an die am in den Figuren axial oberen Ende ein Deckel 18 anschließt, der hier einstückig mit der Umfangswand 16 verbunden ist.

Im Ringschieber 12 sind auf unterschiedlichen axialen Höhen, bezogen auf die Längsachse A des Thermostat-Ringschieberventils 10, zwei axial voneinander getrennte, umfangsmäßig abschnittsweise umlaufende, schlitzförmige Einlassöffnungen 20, 22 ausgebildet.

Das Gehäuse 14 umgibt den Ringschieber 12 konzentrisch und erweitert sich in mehreren Stufen in Richtung auf sein offenes axiales Ende.

Die axial offenen Enden des Ringschiebers 12 und des Gehäuses 14 bilden einen Fluidauslass 24.

Im Gehäuse 14 sind auf unterschiedlichen axialen Höhen drei umfangsmäßig weitgehend umlaufende Fluideinlässe 26, 28, 30 vorgesehen, die mit unterschiedlichen Abschnitten eines Kühlkreislaufs einer Verbrennungskraftmaschine in Verbindung stehen (nicht gezeigt).

In axialer Richtung A sind die Fluideinlässe 26, 28, 30 durch insgesamt vier Dichtelemente 32, hier durch Dichtringe realisiert, fluiddicht voneinander getrennt.

Der Fluidauslass 24, der mit einer (nicht dargestellten) Wasserpumpe verbunden ist, über die der Kühlkreislauf geschlossen ist.

Im Inneren des Ringschiebers 12 ist ein temperaturabhängiges Antriebssystem in Form eines Thermostatelements 36 aufgenommen, das mit dem Deckel 18 des Ringschiebers 12 fest verbunden ist. Bei einer Erhöhung der Temperatur dehnt sich das Thermostatelement 36 aus und verschiebt den Ringschieber 12 in axialer Richtung A im Gehäuse 14 (in den Figuren nach oben).

Rückstellfedern 38, 40, die zwischen dem Gehäuse 14 und dem Deckel 18 des Ringschiebers 12 bzw. zwischen dem Deckel 18 und dem Thermostatelement 36 angeordnet sind, erzeugen eine Rückstellkraft in Richtung zur in Figur 1 gezeigten Normalstellung und fixieren außerdem den Ringschieber 12 in der jeweiligen durch das Thermostatelement 36 vorgegebenen Position.

Das in Figur 1 gezeigte Thermostat-Ringschieberventil 10 kann in dieser Form vormontiert werden und direkt in einen Zulaufkanal zur Wasserpumpe eingesetzt werden (nicht dargestellt). Die Flussrichtung des Kühlfluids ist hier über die Fluideinlässe 26, 28,30 zum Fluidauslass 24.

Im Deckel 18 ist ein (hier nicht dargestelltes) Überdruckventil eingesetzt, beispielsweise in Form eines Rückschlagventils, das bei Überschreiten eines vorbestimmten Druckniveaus eine Strömungsverbindung zwischen dem Fluideinlass 30 und den Fluidauslass 24 freigibt.

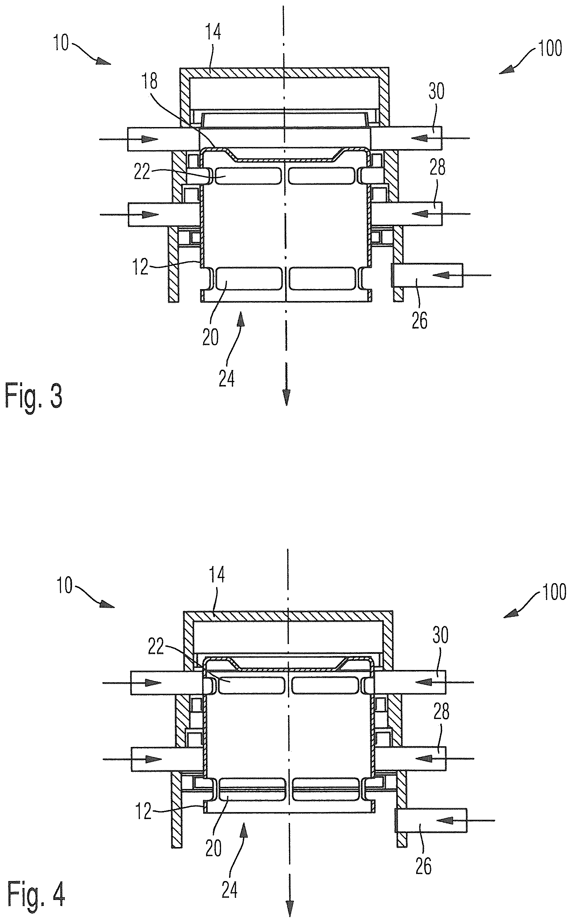

Anhand der Figuren 3 bis 6 wird die Funktionsweise des Thermostat-Ringschieberventils 10 beschrieben. Dort ist das Thermostat-Ringschieberventil 10 in ein Kühlsystem 100 einer Verbrennungskraftmaschine, z.B. in einem Fahrzeug, eingesetzt.

Der in den Figuren unterste der Fluideinlässe 26 bildet einen Rücklaufkanal eines Heizungskreislaufs. Der in den Figuren mittlere Fluideinlass 28 bildet einen Rücklaufkanal eines Kühlerkreislaufs, und der in den Figuren oberste Fluideinlass 30 bildet in diesem Beispiel einen Rücklaufkanal eines Motorkreislaufs.

Der Motorkreislauf leitet Kühlfluid durch den Motorblock, insbesondere durch ein Kurbelgehäuse der Verbrennungskraftmaschine, während der Kühlkreislauf Kühlfluid durch den eigentlichen Kühler der Verbrennungskraftmaschine leitet. Der Heizungskreislauf leitet das Kühlfluid durch eine Fahrzeuginnenraumheizung. Es können noch weitere Fluideinlässe vorgesehen sein, die zu anderen Teilkühlkreisläufen führen.

Der Fluidauslass 24 ist mit der Eingangsseite der Wasserpumpe verbunden.

Figur 3 zeigt den Normalzustand beim Starten der Verbrennungskraftmaschine, wenn das Kühlfluid und der Motor kalt sind. Der Ringschieber 12 befindet sich in seiner bezogen auf die Figuren untersten Position. Der Fluideinlass 28 des Kühlerkreislaufs ist durch die Umfangswand 16 des Ringschiebers 12 verschlossen. Der Fluideinlass 30 des Motorkreislaufs ist ebenfalls verschlossen, da der Deckel 18 des Ringschiebers 12 in Axialrichtung A bezogen auf die Figuren unterhalb des Fluideinlasses 30 liegt und somit einen Fluidstrom in den Ringschieber 12 und das Gehäuse 14 hinein unterbindet.

Lediglich der Fluideinlass 26 des Heizungskreislaufs hat über die untere Einlassöffnung 20 und das Gehäuse 14 eine Strömungsverbindung zum Fluidauslass 24, sodass in diesem Teilkreislauf Kühlfluid zirkulieren kann.

Die Strömungsverbindung über den untersten Fluideinlass 26 und den Fluidauslass 24 bleibt in jedem Zustand des Thermostat-Ringschieberventils 10 bestehen. In diesem Beispiel ist der Ringschieber 12 so ausgebildet, dass die untere Einlassöffnung 20 in der in den Figuren 1 und 3 dargestellten Normalstellung bei tiefen Temperaturen auf der axialen Höhe des Fluideinlasses 26 des Heizungskreislaufs liegt. Zudem ist durch die zylindrische Außenkontur des Ringschiebers 12 und die Aufweitung des Gehäuses 14 zum Fluidauslass 24 am axialen offenen Ende 24 ein umlaufender Spalt zwischen der Umfangswand 16 des Ringschiebers 12 und der Innenwand des Gehäuses 14 gebildet, der eine ständige Strömungsverbindung zwischen dem Fluideinlass 26 und dem Fluidauslass 24 schafft.

Erhöht sich die Temperatur des Kühlfluids, wird durch das Thermostatelement 36 der Ringschieber 12 angehoben, wobei in der in Figur 4 gezeigten Stellung die obere Einlassöffnung 22 auf die axiale Höhe des Fluideinlasses 30 des Motorkreislaufs gehoben wird und so eine Strömungsverbindung zwischen dem Motorkreislauf und dem Fluidauslass 24 geschaffen wird.

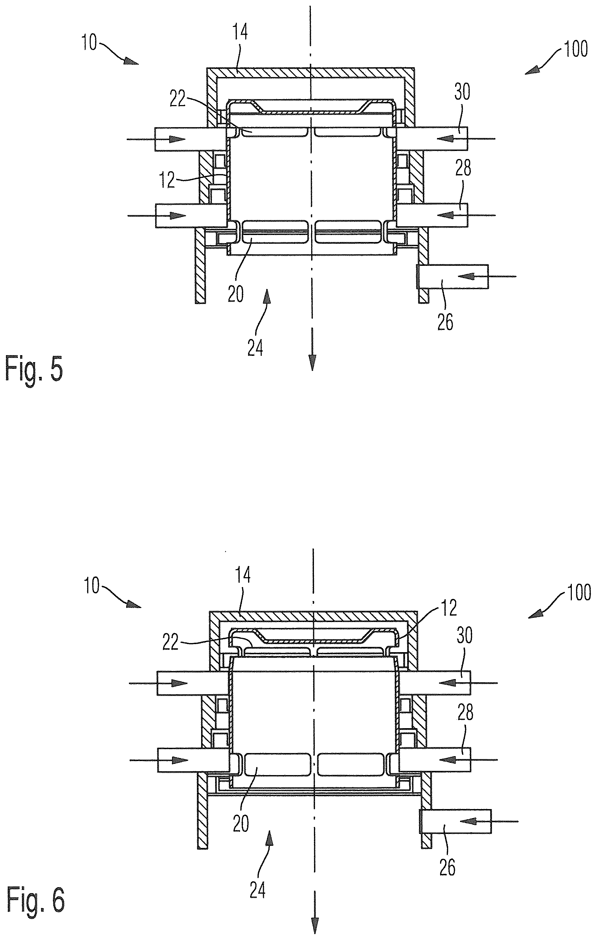

Erhöht sich die Temperatur weiter, bewegt sich der Ringschieber 12 in die in Figur 5 gezeigte Position. Dort überschneidet sich die obere Einlassöffnung 22 noch teilweise mit dem Fluideinlass 30, während die untere Einlassöffnung 20 bereits teilweise mit dem Fluideinlass 28 des Kühlkreislaufs überlappt. In diesem Mischbetrieb strömt ein Teil des Kühlfluids aus dem Motorkreislauf direkt zur Wasserpumpe zurück, während ein anderer Teil des Kühlfluids bereits über den Kühlerkreislauf geleitet und somit gekühlt wird.

Bei weiter steigender Temperatur wird der Ringschieber 12 in die in Figur 6 gezeigte Stellung bewegt, in der die obere Einlassöffnung 22 sich über die Ebene des Fluideinlasses 30 des Motorkreislaufs hinaus bewegt hat, sodass dieser durch die Umfangswand 16 des Ringschiebers 12 verschlossen ist. Die untere Einlassöffnung 20 liegt hingegen auf der axialen Höhe des Fluideinlasses 28, sodass das Kühlfluid über den Kühlerkreislauf geleitet wird.

Reduziert sich die Temperatur wieder, wird der Ringschieber 12 über das Thermostatelement 36 und die Rückstellfedern 38, 40 wieder in Axialrichtung A in den Figuren nach unten verfahren.

## Patentansprüche

1. Thermostat-Ringschieberventil, insbesondere für ein Kühlsystem einer Verbrennungskraftmaschine, mit einem Ringschieber (12), der zwei axial vonei-nander getrennte, umfangsmäßig abschnittsweise umlaufende Einlassöffnungen (20, 22) aufweist, und
einem Gehäuse (14), in dem der Ringschieber (12) aufgenommen ist, das zumindest drei jeweils auf unterschiedlichen axialen Höhen angeordnete Fluideinlässe (26, 28, 30) sowie einen Fluidauslass (24) aufweist,
wobei der Ringschieber (12) im Gehäuse (14) temperaturabhängig axial so verschiebbar ist, dass ein erster und ein zweiter Fluideinlass (28, 30) gleichzeitig komplett verschlossen, jeweils einzeln ganz verschlossen, jeweils einzeln teilweise geöffnet, gleichzeitig teilweise geöffnet sowie jeweils einzeln komplett geöffnet sein können,
während ein dritter Fluideinlass (26) in ständiger Strömungsverbindung mit dem Fluidauslass (24) steht.

2. Thermostat-Ringschieberventil nach Anspruch 1, dadurch gekennzeich-net, dass der Ringschieber (12) an einem ersten axialen, stirnseitigen Ende ge-schlossen und an einem zweiten axialen, stirnseitigen Ende (24) offen ausgebildet ist.

3. Thermostat-Ringschieberventil nach Anspruch 2, **dadurch gekennzeichnet, dass** das offene axiale Ende (24) des Ringschiebers (12) in ständiger Strömungsverbindung mit dem Fluidauslass (24) steht.

4. Thermostat-Ringschieberventil nach einem der Ansprüche 2 und 3, **dadurch gekennzeichnet, dass** die axiale Länge des Ringschiebers so gewählt ist, dass bei Verschiebung des Ringschiebers bei steigender Temperatur dessen offenes axiales Ende den dritten Fluideinlass freigibt.

5. Thermostat-Ringschieberventil nach einem der vorhergehenden Ansprüche, **dadurch gekennzeichnet, dass** ein Überdruckventil im Ringschieber (12) vorgesehen ist, das insbesondere im geschlossenen axialen Ende des Ringschiebers (12) angeordnet ist.

6. Thermostat-Ringschieberventil nach einem der vorhergehenden Ansprüche, **dadurch gekennzeichnet, dass** der Ringschieber (12) topfartig ausgebildet ist, insbesondere wobei das Gehäuse (14) sich zum offenen axialen Ende (24) des Ringschiebers (12) innenseitig stufenweise aufweitet.

7. Thermostat-Ringschieberventil nach einem der vorhergehenden Ansprüche, **dadurch gekennzeichnet, dass** ein Thermostatelement (36) innerhalb des Ringschiebers (12) angeordnet ist.

8. Thermostat-Ringschieberventil nach einem der vorhergehenden Ansprüche, **dadurch gekennzeichnet, dass** im Gehäuse (14) Dichtelemente (32) axial zwischen den Fluideinlässen (26, 28, 30) vorgesehen sind.

9. Kühlsystem mit einem Thermostat-Ringschieberventil mit einem Ringschieber (12), der zwei axial voneinander getrennte, umfangsmäßig abschnittsweise umlaufende Einlassöffnungen (20, 22) aufweist, und einem Gehäuse (14), in dem der Ringschieber (12) aufgenommen ist, das zumindest drei jeweils auf unterschiedlichen axialen Höhen angeordnete Fluideinlässe (26, 28, 30) sowie einen Fluidauslass (24) aufweist, wobei der Ringschieber (12) im Gehäuse (14) temperaturabhängig axial so verschiebbar ist, dass zumindest zwei der Fluideinlässe (28, 30) jeweils sowohl ganz als auch teilweise verschließbar sind, während ein dritter Fluideinlass (26) in ständiger Strömungsverbindung mit dem Fluidauslass (24) steht, wobei die drei Fluideinlässe (26, 28, 30) mit Rücklaufkanälen eines Heizungskreislaufs, eines Motorkreislaufs und eines Kühlerkreislaufs verbunden sind und das Thermostat-Ringschieberventil (10) so angeordnet ist, dass mit steigender Temperatur zunächst der Rücklaufkanal des Motorkreislaufs und dann kontinuierlich zusätzlich der Rücklaufkanal des Kühlerkreislaufs geöffnet wird und anschließend der Rücklaufkanal des Motorkreislaufs wieder geschlossen wird.

10. Kühlsystem nach Anspruch 9, **dadurch gekennzeichnet, dass** in jeder Stellung des Ringschiebers (12) über den dritten Fluideinlass (26) und den Fluidauslass (24) eine Strömungsverbindung vom Heizungskreislauf zu einer Wasserpumpe des Kühlsystems (100) besteht.

11. Kühlsystem nach einem der Ansprüche 9 und 10 mit einem Thermostat-Ringschieberventil nach einem der Ansprüche 1 bis 8.

## Claims

1. A thermostat annular slide valve, especially for a cooling system of an internal combustion engine, with an annular slide (12) which has two inlet openings (20, 22) axially separated from each other which are circumambient in portions on the periphery, and
with a housing (14) in which the annular slide (12) is accommodated, which housing has at least three fluid inlets (26, 28, 30) arranged in each case at different axial heights and also a fluid outlet (24),
wherein the annular slide (12) is axially displaceable in the housing (14) dependent on temperature such that a first and a second fluid inlet (28, 30) can be completely closed simultaneously, entirely closed individually in each case, partially opened individually in each case, partially opened simultaneously and completely opened individually in each case,
while a third fluid inlet (26) is in a constant flow connection with the fluid outlet (24).

2. A thermostat annular slide valve according to Claim 1, **characterised in that** the annular slide (12) is designed to be closed on a first axial end-face end and open on a second axial end-face end (24).

3. A thermostat annular slide valve according to Claim 2, **characterised in that** the open axial end (24) of the annular slide (12) is in a constant flow connection with the fluid outlet (24).

4. A thermostat annular slide valve according to one of Claims 2 and 3, **characterised in that** the axial length of the annular slide is selected such that upon displacement of the annular slide with rising temperature the open axial end thereof releases the third fluid inlet.

5. A thermostat annular slide valve according to one of the preceding claims, **characterised in that** a pressure relief valve which is arranged especially in the closed axial end of the annular slide (12) is provided in the annular slide (12).

6. A thermostat annular slide valve according to one of the preceding claims, **characterised in that** the annular slide (12) is pot-shaped, especially with the housing (14) widening in steps on the inside towards the open axial end (24) of the annular slide (12).

7. A thermostat annular slide valve according to one of the preceding claims, **characterised in that** a thermostat element (36) is arranged within the annular slide (12).

8. A thermostat annular slide valve according to one of the preceding claims, **characterised in that** sealing elements (32) are provided in the housing (14) axially between the fluid inlets (26, 28, 30).

9. A cooling system with a thermostat annular slide valve with a annular slide (12) which has two inlet openings (20, 22) axially separated from each other which are circumambient in portions on the periphery, and with a housing (14) in which the annular slide (12) is accommodated, which housing has at least three fluid inlets (26, 28, 30) arranged in each case at different axial heights and also a fluid outlet (24), wherein the annular slide (12) is axially displaceable in the housing (14) dependent on temperature such that at least two of the fluid inlets (28, 30) in each case can be both entirely and partially closed, while a third fluid inlet (26) is in a constant flow connection with the fluid outlet (24), wherein the three fluid inlets (26, 28, 30) are connected to return ducts of a heating circuit, of an engine circuit and of a radiator circuit and the thermostat annular slide valve (10) is arranged such that with rising temperature first of all the return duct of the engine circuit and then continuously additionally the return duct of the radiator circuit is opened and then the return duct of the engine circuit is closed again.

10. A cooling system according to Claim 9, **characterised in that** in each position of the annular slide (12) there exists a flow connection from the heating circuit to a water pump of the cooling system (100) via the third fluid inlet (26) and the fluid outlet (24).

11. A cooling system according to one of Claims 9 and 10 with a thermostat annular slide valve according to one of Claims 1 to 8.

## Revendications

1. Soupape à glissière annulaire thermostatée, en particulier destinée à un système de refroidissement d'un moteur à combustion interne comprenant une glissière annulaire (12) qui comporte deux ouvertures d'entrée (20, 22) séparées axialement l'une de l'autre et s'étendant par segments sur sa périphérie, et
un boîtier (14) dans lequel est logé la glissière annulaire (12) qui comporte au moins trois admissions de fluide (26, 28, 30) respectivement installées à différentes hauteurs axiales ainsi qu'une évacuation de fluide (24),
la glissière annulaire (12) étant susceptible de coulisser axialement en fonction de la température dans le boîtier (14) de sorte qu'une première admission de fluide et une seconde admission de fluide (28, 30) soient simultanément complètement fermées, respectivement indépendamment totalement fermées, respectivement individuellement partiellement ouvertes, simultanément partiellement ouvertes ou individuellement complètement ouvertes,
tandis qu'une troisième admission de fluide (26) est en liaison fluidique permanente avec l'évacuation de fluide (24).

2. Soupape à glissière annulaire thermostatée conforme à la revendication 1,
**caractérisé en ce que**
la glissière annulaire (12) est fermée à une première extrémité axiale côté frontal et est ouverte à une seconde extrémité axiale côté frontal (24).

3. Soupape à glissière annulaire thermostatée conforme à la revendication 2,
**caractérisé en ce que**
l'extrémité axiale ouverte (24) de la glissière annulaire (12) est en liaison fluidique permanente avec l'évacuation de fluide (24).

4. Soupape à glissière annulaire thermostatée conforme à l'une des revendications 2 et 3,
**caractérisé en ce que**
la longueur axiale de la glissière annulaire est choisie de sorte que, lors de son coulissement lorsque la température augmente son extrémité axiale ouverte libère la troisième admission de fluide.

5. Soupape à glissière annulaire thermostatée conforme à l'une des revendications précédentes,
**caractérisé en ce qu'**
il est prévu dans la glissière annulaire (12) une soupape de décharge de pression qui est en particulier installée dans son extrémité axiale fermée.

6. Soupape à glissière annulaire thermostatée conforme à l'une des revendications précédentes,
**caractérisé en ce que**
la glissière annulaire (12) est en forme de pot et en particulier le boîtier (14) s'élargit par échelons sur sa face interne vers l'extrémité axiale ouverte (24) de la glissière annulaire (12).

7. Soupape à glissière annulaire thermostatée conforme à l'une des revendications précédentes,
**caractérisé en ce qu'**
un élément thermostaté (36) est installé à la partie interne de la glissière annulaire (12).

8. Soupape à glissière annulaire thermostatée conforme à l'une des revendications précédentes,
**caractérisé en ce que**
le boîtier (14) comporte des éléments d'étanchéité (32) positionnés axialement entre les admissions de fluide (26, 28, 30).

9. Système de refroidissement comprenant une soupape à glissière annulaire thermostatée, comportant une glissière annulaire (12) qui comporte deux ouvertures d'entrée (20, 22) séparées axialement l'une de l'autre et s'étendant par segments sur sa périphérie, et un boîtier (14) dans lequel est logé la glissière annulaire (12) qui comporte au moins trois admissions de fluide (26, 28, 30) respectivement installées à différentes hauteurs axiales ainsi qu'une évacuation de fluide (24), la glissière annulaire (12) étant susceptible de coulisser axialement dans le boîtier (14) en fonction de la température de sorte qu'au moins deux des admissions de fluide (28, 30) puisse être respectivement partiellement ou totalement fermées alors qu'une troisième admission de fluide (26) est en permanence en liaison fluidique avec l'évacuation de fluide (24), les trois admissions de fluide (26, 28, 30) étant reliées à des canaux de retour d'un circuit de chauffage d'un circuit du moteur et d'un circuit de refroidissement, et, la soupape à glissière annulaire thermostatée (10) étant montée de sorte que, lorsque la température augmente tout d'abord le canal de retour du circuit du moteur puis en continu en outre le canal de retour du circuit de refroidissement soient ouverts, puis que le canal de retour du circuit du moteur soit à nouveau fermé.

10. Système de refroidissement conforme à la revendication 9,
**caractérisé en ce que**
dans chaque position de la glissière annulaire (12) il y a une liaison fluidique par l'intermédiaire de la troisième admission de fluide (26) et de l'évacuation de fluide (24) entre le circuit de chauffage et une pompe à eau du système de refroidissement (100).

11. Système de refroidissement conforme à l'une des revendications 9 et 10,
comprenant une soupape à glissière annulaire thermostatée conforme à l'une des revendications 1 à 8.
